# EUROPÄISCHE PATENTANMELDUNG

(11) **EP 3 868 604 A1**
(43) Veröffentlichungstag der Anmeldung: **25.08.2021**
(21) Anmeldenummer: 21000057.6
(22) Anmeldetag: 17.02.2021
(51) Int. Cl.: B60P 7/08

(54) **VERSCHLUSS UND TRENNVORRICHTUNG**

(30) Priorität: 19.02.2020 DE 102020001053
(71) Anmelder: Span Set Gesellschaft für Transportsysteme und technische Bänder mit beschränkter Haftung & Co. Kommanditgesellschaft, 52531 Übach-Palenberg (DE)
(72) Erfinder: BISCHHAUS, Hans-Dieter, 52531 Übach- Palenberg (DE)
(74) Vertreter: ETL IP Patent- und Rechtsanwaltsgesellschaft mbH

(57) **Zusammenfassung**

Die Erfindung bezieht sich auf einen Verschluss für Gurt-, Seil- und/oder Flächensicherungsmittel, wie Spanngurte oder Ladungssicherungsnetze sowie eine Trennvorrichtung mit einem Verschluss, wobei der Verschluss über eine Aufnahme für ein Gurt-, Seil- und/oder Flächensicherungsmittel oder eine Anschlagvorrichtung zum Eingriff in eine Halteöffnung, an welche der Verschluss anbringbar ist, verfügt, der Verschluss ein schwenkbares und arretierbares Bügelelement aufweist, das im arretierten Zustand mit dem Verschluss eine erste Öse des Verschlusses bildet, wobei die Aufnahme einen ersten Abschnitt des Gurt-, Seil- und/oder Flächensicherungsmittels aufnehmen kann und der Verschluss mittels des schwenkbaren und arretierbaren Bügelelements mit einem zum ersten Abschnitt korrespondierenden Bereich oder einem Endabschnitt des Gurt-, Seil- und/oder Flächensicherungsmittels eine lösbare, miteinander koppelbare Verbindung eingehen kann.

## Beschreibung

Die Erfindung bezieht sich auf einen Verschluss für Gurt-, Seil- und/oder Flächensicherungsmittel, wie Spanngurte oder Ladungssicherungsnetze, allgemein somit zur Sicherung von Ladungen in oder auf Fahrzeugen sowie auf eine Trennvorrichtung zur Sicherung von Ladung mit einem solchen Verschluss.

Trennvorrichtungen zur Sicherung von Ladungen in Form eines vieleckigen, vorrangig rechteckigen flächenhaften Gebildes, welches durch sich in einem definierten Winkel kreuzende biegeschlaffe Streben gebildet wird und die biegeschlaffen Streben in Kreuzungspunkten und Eckpunkten miteinander verbunden sind in Form vieleckiger flächenhafter Gebilde sind unter anderem aus der US 2013 0064620 A1 bekannt. Die dort beschriebenen Trennvorrichtungen bzw. Trennnetze werden zur Teilung und Abgrenzung von Laderäumen, insbesondere in Kraftfahrzeugen, so Transportfahrzeugen mit einem Laderaum, benutzt. Sie sind in der Regel vertikal stehend angeordnet.

Beim Einsatz in Kraftfahrzeugen werden einzelne Teile der Ladung von anderen Teilen der Ladung in dem Laderaum mit derartigen Trennvorrichtungen abgegrenzt. Dabei wirkt auf die Fläche der Trennvorrichtung beispielsweise beim Verrutschen der Ladung eine Kraft, die in der Regel zu einer Verformung der Trennvorrichtung führt. Fällt die Verformung sehr stark aus, besteht eine erhöhte Gefahr der Beschädigung anderer angrenzender Ladung. Darüber hinaus kommt es gleichsam zu einer erhöhten mechanischen Beanspruchung der Trennvorrichtung. So besteht die Gefahr eines Ausreißens von randseitig an der Trennvorrichtung angeordneten und in dazu passende Vorrichtungen, so Schlüssellochleisten, anordnenbare Arretierungsmittel.

Das ist, wie dargestellt, dann der Fall, wenn durch ein Verschieben einzelner Teile einer Ladung, so beispielsweise einzelner Kartons, eine Kraft nicht zentriert auf die Trennvorrichtung wirkt, sondern dezentral, insbesondere in den Rand- oder Eckbereichen.

Darüber hinaus ist aufgrund der Druckbeaufschlagung auch ein Öffnen der Trennvorrichtung erschwert oder gar nicht möglich, sodass diese zerstört, so einzelne Teile dieser durchschnitten werden müssen, um eine Entnahme der Ladung sicherzustellen.

In der Vergangenheit wurden dazu, insbesondere für Last- bzw. Spanngurte oder Kombinationen von solchen, wiederverschließbare Verschlüsse oder Anschlagvorrichtungen in Form von Gurtschlössern vorgeschlagen, die jeweils durch mechanische Betätigung eines Nutzers ein Öffnen und Wiederschließen gewähren, so die DE 1848006 U, die US 8572815 A1, die US 2013 0064620, die CN 106965123 A, als auch die DE 20 2018 105 613 U1, DE 20 2018 105 749 U1 und DE 20 2018 106 361 U1.

Die dort offenbarten Verschlüsse weisen zwei Elemente auf, die zueinander korrespondierend in eine Wirkverbindung treten. Dies kann jedoch bei einer Druckbeaufschlagung von entsprechenden Lastgruppen oder einer vorbeschriebenen Trennvorrichtung nachteilig sein, wenn nämlich beim Öffnen ein oder beide korrespondierenden Elemente aufspringen und dabei gegebenenfalls einen Benutzer verletzen. Ebenfalls erweisen sich die Lösungen als relativ kostenintensiv, da jeweils zwei Elemente in Wirkverbindung miteinander treten.

Die Aufgabe der Erfindung besteht darin, einen optimierten Verschluss zu gewährleisten, der am Gurt-, Seil- und/oder Flächensicherungsmittel angeordnet ist oder selbst als Anschlagvorrichtung ein Gurt-, Seil- und/oder Flächensicherungsmittel ist. Gleichsam soll ein optimiertes Gurt-, Seil- und/oder Flächensicherungsmittel als Trennvorrichtung zur Verfügung gestellt werden.

Die Aufgabe wird gemäß den Merkmalen der unabhängigen Ansprüche 1, 12 und 14 gelöst.

Danach weist ein Verschluss für ein Gurt-, Seil- und/oder Flächensicherungsmittel eine Aufnahme für ein Gurt-, Seil- und/oder Flächensicherungsmittel oder eine Anschlagvorrichtung zum Eingriff in eine Halteöffnung, so beispielhaft eine Öffnung einer Schlüssellochschiene, an welche der Verschluss anbringbar ist, auf. Ferner weist der Verschluss ein schwenkbares und arretierbares Bügelelement auf, das im arretierten Zustand mit dem Verschluss, das heißt dem Verschlusskorpus, eine erste Öse des Verschlusses bildet. Die Aufnahme kann einen ersten Abschnitt des Gurt-, Seil- und/oder Flächensicherungsmittels aufnehmen. Der Verschluss kann mittels des schwenkbaren und arretierbaren Bügelelements mit einem zum ersten Abschnitt korrespondierenden Bereich oder einem Endabschnitt des Gurt-, Seil- und/oder Flächensicherungsmittels eine lösbare, miteinander koppelbare Verbindung eingehen. Als Trennvorrichtung im Sinne der Erfindung kann auch ein Flächensicherungsmittel verstanden werden.

Das schwenkbare Bügelelement des Verschlusses kann dabei bei funktionsgemäßer Anwendung in eine Schlaufe des korrespondierenden Bereichs oder des Endabschnitts des Gurt-, Seil- und/oder Flächensicherungsmittels eingreifen, sodass die Schlaufe im arretierten, geschlossenen Zustand des Bügelelementes in der ersten Öse des Verschlusses funktionssicher gehalten werden kann. Der Verschluss mit dem Bügelelement bildet im verschlossenen Zustand die erste Öse. Unter einem schwenkbaren Bügelelement im Sinne der Erfindung ist auch ein Bügelelement zu verstehen, das zweigeteilt ist und bei dem faktisch zwei schwenkbare Elemente vorhanden sind, die nebeneinander liegen oder sich gegenüberstehen können. Dies ist lediglich aus Gründen der Übersichtlichkeit nicht dargestellt.

Das Bügelelement ist vorzugsweise in Zugrichtung des Gurt-, Seil- und/oder Flächensicherungsmittels verschwenkbar und damit in Zugrichtung öffnenbar.

Daher ist es möglich, den Verschluss bei Belastung, zum Beispiel bei Verrutschen eines Ladeguts in Richtung des Flächensicherungsmittels, also der Trennvorrichtung_in Zugrichtung leicht zu öffnen.

Das schwenkbare Bügelelement kann mittels jeglicher bekannter Sicherungsmittel gehalten werden, wie Stifte, Splinte, Bolzen und ähnlichen Vorrichtungen. In einer Ausführung ist er mittels eines schwenkbaren Riegels arretierbar.

In einer weiteren Ausführung ist das Bügelelement mittels eines drehbaren Elements, beispielhaft eines drehbaren Stifts, mit einem asymmetrischen Abschnitt arretierbar. In einer Variante ist das Bügelelement axparallel zum Bügelelement angeordnet. Die Drehachse des Elements und die Drehachse des Bügelelements verlaufen dabei parallel verschoben zueinander. In einer Offenstellung des Elements kann das Bügelelement frei verschwenkt werden und in einer anderen Stellung, einer Verschlussstellung des Elements, ist das Bügelelement aufgrund des asymmetrischen Abschnitts des Elements, so zum Beispiel des Stiftes, arretierbar. Der asymmetrische Abschnitt kann bei der Verschlussstellung des Elements ein Aufschwenken des Bügelelements verhindern und sperrt somit eine Öffnungsbewegung.

Die Aufnahme des Verschlusses bildet eine zweite Öse, die eine Schlaufe des ersten Abschnitts des Gurt-, Seil- und/oder Flächensicherungsmittels aufnehmen kann.

Wenn der Verschluss eine Anschlagvorrichtung aufweist, dann kann diese einen Zapfen zur Anordnung an eine Schlüssellochschiene besitzen. Der Zapfen weist sodann einen verjüngten und einen tellerförmigen Abschnitt mit einer konischen Fläche auf, der ein Aufnehmen und funktionssicheres Halten des Verschlusses in einer entsprechenden korrespondierenden Arretierhalterung gewährleisten kann. Die Arretierhalterung selbst kann eine horizontale oder vertikale Schiene, so eine Schlüssellochschiene, sein.

In einer Ausführungsform weist der Verschluss eine Haltestange auf, die bei funktionsgemäßer Anordnung bodenseitig, so zu einem Ladeboden weist. Sie dient dazu, damit ein Benutzer einer erfindungsgemäßen Vorrichtung eine Art Armverlängerung besitzt, um seine Größe überragende, so über Kopf angeordneten Verschlüsse leichter handhaben zu können.

Der Verschluss kann aus jeglichem bekannten und geeigneten Material gefertigt sein und jeglichem geeigneten Verfahren hergestellt werden, vorzugsweise ist er aus Metall gefertigt bzw. aus einem geeigneten Kunststoff.

Des Weiteren sieht die Erfindung eine Trennvorrichtung vor, die den erfinderischen Verschluss aufweist. Die Trennvorrichtung ist ein bekanntes flächenhaftes Gebilde zur Sicherung von Ladungen eines Laderaumes, wobei die Trennvorrichtung durch sich in einem definierten Winkel in einer Ebene kreuzende biegeschlaffe Streben gebildet wird und die biegeschlaffen Streben in Kreuzungspunkten miteinander verbunden sind und die Trennvorrichtung randseitig Anschlagvorrichtungen aufweist. In dieser Ausgestaltung der Erfindung weist die Trennvorrichtung mindestens einen vorbeschriebenen Verschluss auf. Die Trennvorrichtung kann aus jeglichem bekannten und geeigneten Material gefertigt sein und jeglichen geeigneten Verfahren hergestellt werden.

Der mindestens eine Verschluss ist dabei an mindestens einer biegeschlaffen Strebe funktionssicher angeordnet, was alle bekannten und für den Fachmann geeigneten Arten der Anordnung umfasst und er kann, beziehungsweise geht mit einer zu der mindestens einen biegenschlaffen Strebe korrespondieren Bereich der Trennvorrichtung eine lösbare, miteinander koppelbare Verbindung ein.

Das schwenkbare Bügelelement des mindestens einen Verschlusses kann dabei in eine Schlaufe des korrespondierenden Bereichs der Trennvorrichtung eingreifen, sodass die Schlaufe im arretierten Zustand des Bügelelements in der ersten Öse des mindestens einen Verschlusses funktionssicher gehalten werden kann. Als korrespondierender Bereich ist jeder Teil der Trennvorrichtung zu verstehen, der eine Schlaufe aufweist, in die das schwenkbare Bügelelement des mindestens einen Verschlusses eingreifen kann, zum Beispiel ein anliegender Abschnitt einer biegeschlaffen Strebe oder ein anliegender Kreuzungspunkt.

Darüber hinaus kann der Verschluss noch in anderer Art an der Trennvorrichtung angeordnet sein, was eine zweite Variante darstellt. In diesem Fall weist die vorbeschriebene Trennvorrichtung mehrere vorbeschriebene Verschlüsse mit einer Anschlagvorrichtung auf. Die Verschlüsse mit ihrer jeweiligen Anschlagvorrichtung sind an den biegeschlaffen Streben derart angeordnet, dass diese mit einem Endabschnitt der Streben eine lösbare, miteinander koppelbare Verbindung eingehen.

Dabei greifen die Verschlüsse mit dem schwenkbaren und arretierbaren Bügelelement vorzugsweise in eine Schlaufe des Endabschitts der Streben ein, sodass die Schlaufe im arretierten Zustand des Bügelelements in der ersten Öse der Verschlüsse funktionssicher gehalten wird.

Die Anschlagvorrichtung der jeweiligen Verschlüsse mit ihren Zapfen kann bei funktionsgemäßer Anordnung der Trennvorrichtung an eine Halteöffnung, so eine Öffnung einer Schlüssellochschiene, in bekannter Weise eingreifen, sodass die Trennvorrichtung in dem Fachmann bekannter Weise einen Laderaum abtrennen und/oder Ladung sichern kann. Dies gilt auch für die vorbeschriebene erste Variante der Trennvorrichtung.

In einer weiteren Ausgestaltung weist die zweite Variante der Trennvorrichtung mindestens eine Arretierhalterung, so beispielhaft eine Schiene auf, welche die oder einen Teil der Verschlüsse mit ihren Anschlagvorrichtungen jeweils derart aufnimmt, dass ein Eingriff der jeweiligen Anschlagvorrichtungen in eine Halteöffnung, so beispielhaft eine Öffnung einer Schlüssellochschiene, noch gewährbar ist. Dabei ist die jeweilige Anschlagvorrichtung selbst nicht oder nur teilweise von der mindestens einen Arretierhalterung verdeckt, damit ein Einführen derselben in dafür vorgesehene Halteöffnungen möglich ist. Die mindestens eine Arretierhalterung ist zumindest an einer Anschlagseite der Trennvorrichtung angeordnet. Sie kann aber auch an in der Regel den beiden oder noch an mehreren Anschlagseiten angeordnet sein. Die mindestens eine Arretierhalterung gewährt eine Vereinfachung der Bedienung. Das Einhängen der Trennvorrichtung in Halteöffnungen einer Schlüssellochschiene oder Ähnlichem ist vereinfacht. Ferner ist eine Aufnahme von Kräften der Trennvorrichtung am Bodenbereich sichergestellt, dort, wo ansonsten keine Halteöffnungen mehr vorhanden sind und Ladung ansonsten unter die Trennvorrichtung hindurch gleiten kann.

In einer weiteren Variante kann die Trennvorrichtung auch nur mindestens eine Teilarretierhalterung aufweisen, welche bodenseitige Verschlüsse der Trennvorrichtung mit ihren jeweiligen Anschlagvorrichtungen jeweils derart aufnimmt, dass ein Eingriff der Anschlagvorrichtungen in die Halteöffnung noch gewährbar ist und die mindestens eine Teilarretierhalterung zumindest an einer Anschlagseite der Trennvorrichtung angeordnet ist. Auch dort stellen sich die vorbeschriebenen Vorteile noch ein.

Sofern die Trennvorrichtung keine Arretierhalterung, sondern gar keine Halterung oder nur eine Teilarretierhalterung aufweist, kann mindestens ein oberer erster Verschluss mit seiner Anschlagvorrichtung eine Haltestange besitzen. Dies gewährt die vorbeschriebenen Vorteile. Die Haltestange dient zum besseren Einhängen der Trennvorrichtung in Halteöffnungen, insbesondere dann, wenn nur die mindestens eine Teilarretierhalterung vorliegt.

Vorzugsweise nimmt die mindestens eine Arretierhalterung und die mindestens eine Teilarretierhalterung Verschlüsse mit ihren Anschlagvorrichtungen formschlüssig auf, dass eine Relativbewegung der Verschlüsse zu diesen in Zugrichtung gewährleistet ist. Dies erleichtert ein Einhängen der Trennvorrichtung in Halteöffnungon.

In einer weiteren Ausgestaltung ist ein erster Verschluss mit seiner Anschlagvorrichtung an der mindestens einen Arretierhalterung oder der mindestens einen Teilarretierhalterung derart angeordnet, sodass eine horizontale Relativbewegung in Zugrichtung zu diesen nicht erfolgt und ein Eingriff der Anschlagvorrichtung des Verschlusses in eine Halteöffnung gewährbar ist. Das erleichtert die Handhabe weiter. Der erste Verschluss mit einer Anschlagvorrichtung wird zuerst in eine korrespondierende Aufnahme eingeführt und sodann die weiteren Verschlüsse mit ihren jeweiligen Anschlagvorrichtungen. Das Einführen beginnt von oben, das heißt dem Ladeboden oder Erdboden abgewandt.

Ferner kann vorgesehen sein, dass die Verschlüsse mit ihren Anschlagvorrichtungen an der mindestens einen Arretierhalterung oder der mindestens einen Teilarretierhalterung derart angeordnet sind, sodass ein Vertikalspiel gegeben ist. Das kann durch ein Langloch erfolgen und dient zur besseren Ausrichtung der Anschlagvorrichtungen an Lochschienen, so Schlüssellochschienen und die dortigen Halteöffnungen.

Des Weiteren kann bei Bedarf vorgesehen sein, dass die Trennvorrichtung ein oder mehrere bekannte Zurrvorrichtungen aufweist, um die Trennvorrichtung bei Bedarf zu spannen.

Die erfindungsgemäße Vorrichtung gewährt verschiedene Vorteile. Der Verschluss besteht nur aus einem Element, das lediglich mit einem Gurt-, Seil- und/oder Flächensicherungsmittel oder einem Teil von diesem eine lösbar miteinander koppelbare Verbindung eingeht. Bei bekannten Vorrichtungen sind jeweils zwei Elemente vorgesehen. Er ist so kostengünstiger. Bei Druckbeaufschlagung des Gurt-, Seil- und/oder Flächensicherungsmittels in Zugrichtung kann der Verschluss relativ einfach gelöst werden. Es muss auch kein Halteelement, wie beispielhaft ein Bolzen, entfernt werden. Da der Verschluss selbst nur ein Element aufweist, ist ein Verletzungsrisiko durch ein Aufspringen bei Zugbeanspruchung geringer, als wenn wie herkömmlich zwei korrespondierende Elemente den Verschluss bilden.

Des Weiteren kann mittels der Vertikalschiene bzw. Teilvertikalschiene die Trennvorrichtung, also beispielhaft das Ladungssicherungsnetz, leichter eingehangen und positioniert werden und zwar unabhängig von der Körpergröße eines Anwenders. Ferner ist eine einhändige Bedienung möglich. Die Vertikalschiene oder Teilvertikalschienen können geringmächtig mit minimalem Gewicht ausgeführt werden, da sie nur im Bereich über dem Boden oder der Ladebodenhöhe, je nach Ausgestaltung bis beispielhaft 40 cm, mit Kräften belastet werden.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

Es zeigen:
**Fig. 1** und **1a** eine schematische Darstellung eines erfindungsgemäßen Verschlusses mit Aufnahme, **Fig. 1**, und einer Anschlagvorrichtung, **Fig. 1a**,
**Fig. 2** und **2a** eine schematische Darstellung einer weiteren Variante eines erfindungsgemäßen Verschlusses mit Aufnahme, **Fig. 2**, und einer Anschlagvorrichtung, **Fig. 2a**,
**Fig. 3** und **3a** eine schematische Darstellung der Variante eines erfindungsgemäßen Verschlusses mit Aufnahme, **Fig. 3**, und einer Anschlagvorrichtung, **Fig. 3a**, in einer anderen Perspektive,
**Fig. 4** eine erfindungsgemäße Trennvorrichtung mit Verschlüssen an Endabschnitten von biegeschlaffen Streben und zwei Arretierhalterungen,
**Fig. 5** eine erfindungsgemäße Trennvorrichtung mit Verschlüssen an Endabschnitten von biegeschlaffen Streben und zwei Arretierhalterungen an Wänden eines Laderaumes angeordnet,
**Fig. 6** eine erfindungsgemäße Trennvorrichtung mit Verschlüssen an Endabschnitten von biegeschlaffen Streben und zwei Teilarretierhalterungen und ersten Verschlüssen mit jeweils einer Haltestange,
**Fig. 7** eine erfindungsgemäße Trennvorrichtung mit Verschlüssen an Endabschnitten von biegeschlaffen Streben und zwei Teilarretierhalterungen und ersten Verschlüssen mit jeweils einer Haltestange an Wänden eines Laderaumes angeordnet.

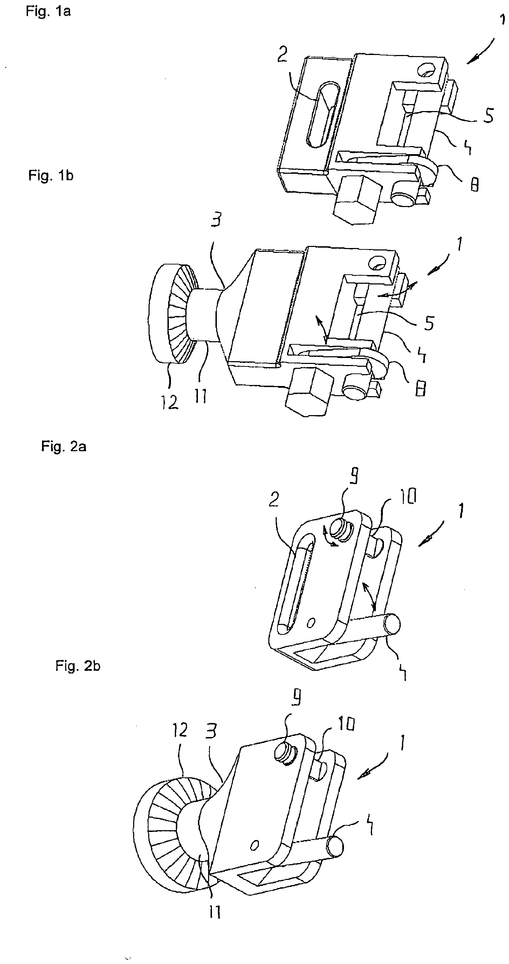

In **Fig. 1a** und **1b** ist ein Verschluss **1** für ein Gurt-, Seil- und/oder Flächensicherungsmittel dargestellt. Der Verschluss **1** besitzt eine Aufnahme **2** für ein Gurt-, Seil- und/oder Flächensicherungsmittel, **Fig. 1a**, und in **Fig. 1b** eine Anschlagvorrichtung **3** zum Eingriff in eine Halteöffnung, im Ausführungsbeispiel eine Öffnung einer Schlüssellochschiene **13**, an welche der Verschluss **1** anbringbar ist. Ferner weist der Verschluss **1** ein schwenkbares und arretierbares Bügelelement **4** auf, das im arretierten Zustand mit dem Verschluss **1,** das heißt dem Verschlusskorpus, eine erste Öse **5** des Verschlusses **1** bildet, wobei die Aufnahme **2** einen ersten Abschnitt des Gurt-, Seil- und/oder Flächensicherungsmittels aufnehmen kann und der Verschluss **1** mittels des schwenkbaren und arretierbaren Bügelelements **4** mit einem zum ersten Abschnitt korrespondierenden Bereich oder einem Endabschnitt **6** des Gurt-, Seil- und/oder Flächensicherungsmittels eine lösbare, miteinander koppelbare Verbindung eingehen kann. Im Ausführungsbeispiel ist das Flächensicherungsmittel eine Trennvorrichtung **7,** nämlich ein Ladungssicherungsnetz.

Das Bügelelement **4** des Verschlusses **1** greift bei funktionsgemäßer Anwendung in eine Schlaufe des korrespondierenden Bereichs oder des Endabschnitts **6** der Trennvorrichtung **7** ein, sodass die Schlaufe im arretierten, geschlossenen Zustand des Bügelelementes **4** in der ersten Öse **5** des Verschlusses **1** funktionssicher gehalten werden kann.

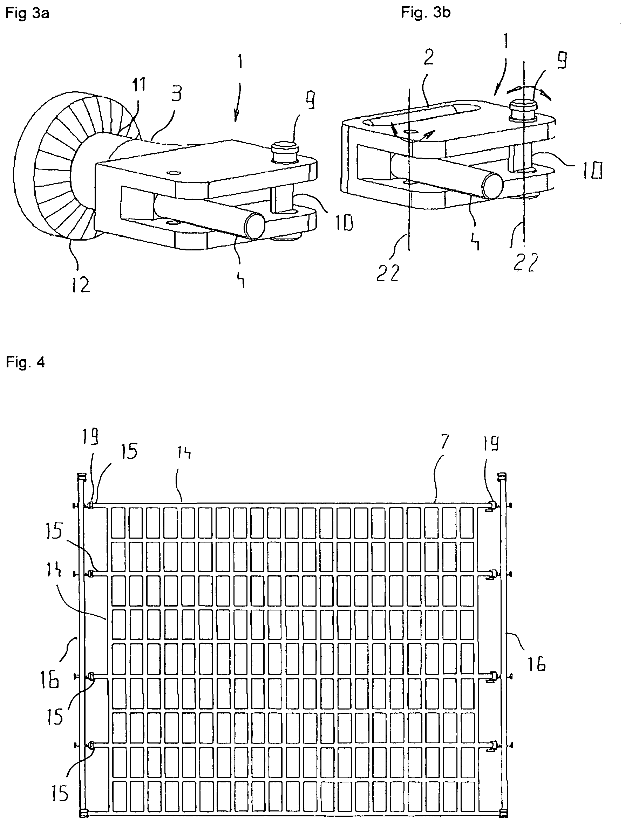

Das Bügelelement **4** ist in Zugrichtung des Gurt-, Seil- und/oder Flächensicherungsmittels verschwenkbar und öffnenbar. Das schwenkbare Bügelelement **4** ist im Ausführungsbeispiel mittels eines schwenkbaren Riegels **8** arretierbar, **Fig. 1a, b****,** und in einer weiteren Ausführung ist das Bügelelement **4** mittels eines drehbaren zum Bügelelement axparallelen Elements, so im Ausführungsbeispiel eines drehbaren Stifts **9** mit einem asymmetrischen Abschnitt **10** arretierbar, **Fig. 2a, b** und **Fig. 3a****, b.** Beide Drehachsen **22** die des Bügelelements **4** und die des Stiftes 9 verlaufen parallel zueinander.

In einer Offenstellung des Stiftes **9** kann das Bügelelement **4** frei verschwenkt werden und in einer anderen Stellung des Stiftes, einer Verschlussstellung, ist das Bügelelement **4** aufgrund des asymmetrischen Abschnitts **10** des Stiftes **9**, der eine Kontur des Stifts **9** bei einem Drehen des Stifts **9** verändert und damit eine Öffnungsbewegung des Bügelelements **4** verhindern kann.

In den **Fig. 1a, 2a** und **3a** weist der Verschluss eine Anschlagvorrichtung **3** mit einem Zapfen **11** zur Anordnung an eine Schlüssellochschiene auf. Der Zapfen **11** verfügt über einen verjüngten und einen tellerförmigen Abschnitt **12** mit einer konischen Fläche. Der tellerförmige Abschnitt **12** gewährt ein Aufnehmen und funktionssicheres Halten des Verschlusses **1** in einer entsprechenden korrespondierenden Arretierhalterung, im Ausführungsbeispiel eine Schlüssellochschiene **13**.

In den **Fig. 4** bis **Fig. 7** ist eine Trennvorrichtung **7** abgebildet. Die Trennvorrichtung **7** ist ein bekanntes flächenhaftes Gebilde zur Sicherung von Ladungen eines Laderaumes, wobei die Trennvorrichtung **7** durch sich in einem rechten Winkel in einer Ebene kreuzende biegeschlaffe Streben **14** gebildet wird und die biegeschlaffen Streben **14** in Kreuzungspunkten miteinander verbunden, so vernäht sind.

Die Trennvorrichtung **7** weist mehrere vorbeschriebene Verschlüsse **1** mit jeweils einer Anschlagvorrichtung **3** auf. Die Verschlüsse **1** mit ihrer jeweiligen Anschlagvorrichtung **3** sind an den biegeschlaffen Streben **14** derart angeordnet, dass diese mit einem Endabschnitt **15** der Streben **14** eine lösbare, miteinander koppelbare Verbindung eingehen, wie es die Ausgestaltung des Verschlusses **1** gewährleistet.

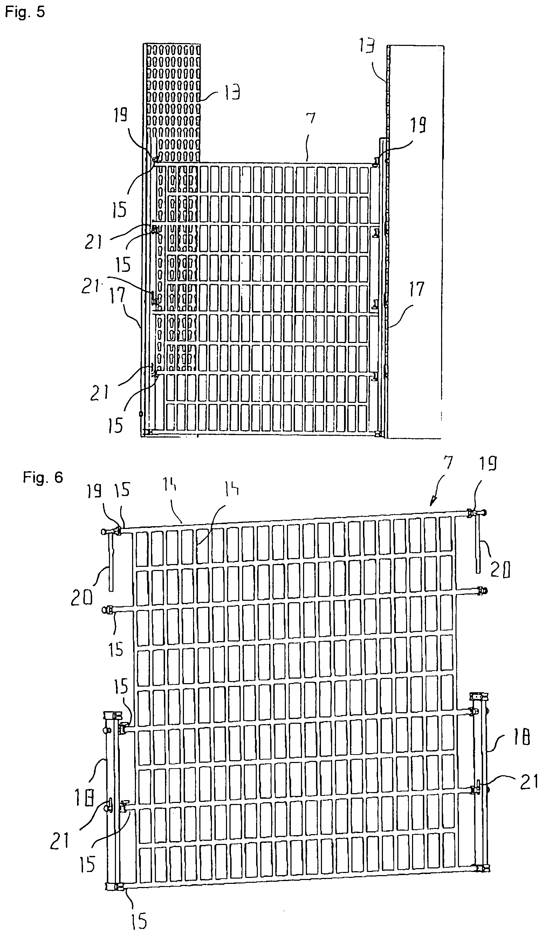

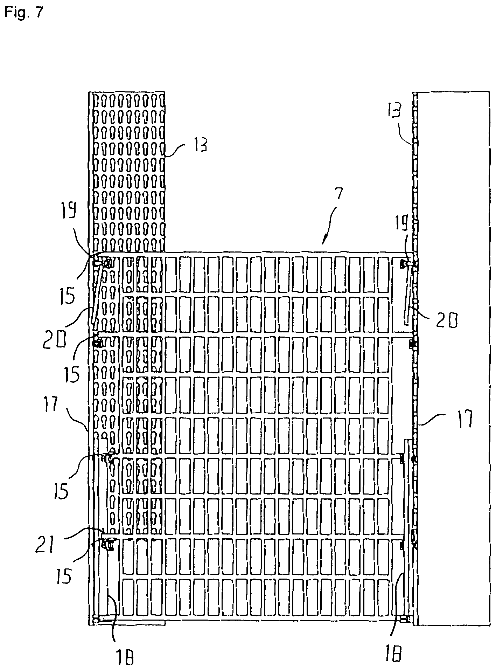

Die Anschlagvorrichtung **3** der jeweiligen Verschlüsse **1** greift mit ihren Zapfen **11** bei funktionsgemäßer Anordnung der Trennvorrichtung **7,** wie in **Fig. 5** und **Fig. 7** dargestellt, an eine Halteöffnung, im Ausführungsbeispiel eine Öffnung einer Schlüssellochschiene **13,** in bekannter Weise ein, sodass die Trennvorrichtung **7** in bekannter Weise einen Laderaum abtrennt und eine vom Laderaum aufgenommene Ladung sichert.

Gemäß der **Fig. 4** und **Fig. 5** weist die Trennvorrichtung **7** zwei Arretierhalterungen **16,** so zwei Schienen auf, welche die Verschlüsse **1** mit ihren Anschlagvorrichtungen **3** jeweils aufnehmen, dass ein Eingriff der jeweiligen Anschlagvorrichtung **3** in die Halteöffnungen der Schlüssellochschienen **13** gewährbar ist. Die beiden Arretierhalterungen **16** sind an beiden vertikalen Anschlagseiten **17** der Trennvorrichtung **7** angeordnet.

In den **Fig. 6** und **Fig. 7** ist eine Trennvorrichtung **7** dargestellt, die zwei Teilarretierhalterungen **18** aufweist, welche bodenseitige Anschlagvorrichtungen **3** der Verschlüsse **1** der Trennvorrichtung **7** jeweils derart aufnehmen, dass ein Eingriff der Anschlagvorrichtungen **3** in die Halteöffnungen der Schlüssellochschienen **13** noch gewährbar ist. Die beiden Teilarretierhalterungen **18** sind auch hier zu beiden vertikalen Anschlagseiten **17** der Trennvorrichtung **7** angeordnet. Ferner weist die Trennvorrichtung **7** zu beiden Anschlagseiten **17** jeweils einen oberen ersten Verschluss **19** mit seiner Anschlagvorrichtung **3** auf, wobei der Verschluss eine Haltestange **20** zur Erleichterung der Handhabe der Trennvorrichtung **7** besitzt. Ein Einhängen dieser in die Schlüssellochschienen **13** ist so erleichtert, insbesondere bei einem Einhängen über Kopf.

Ferner ist der erste Verschluss **19** mit seiner jeweiligen Anschlagvorrichtung **3** an den beiden Arretierhalterungen, **Fig. 4** und **Fig. 5****,** und den beiden Teilarretierhalterungen, **Fig. 6** und **Fig. 7****,** derart angeordnet, sodass eine horizontale Relativbewegung in Zugrichtung nicht erfolgt und ein Eingriff der Anschlagvorrichtung **3** in die Halteöffnungen der Schlüssellochschienen **13** gewährt ist. Das erleichtert die Handhabe weiter. Der erste Verschluss **19** mit seiner Anschlagvorrichtung **3** wird zuerst in die korrespondierende beziehungsweise ausgewählte Halteöffnung der Schlüssellochschiene **13** eingeführt. Sodann folgen die weiteren Verschlüsse **1** mit ihren jeweiligen Anschlagvorrichtungen **3.** Vorteilhaft kann dies erfolgen, wenn wie im Ausführungsbeispiel die Verschlüsse **1** mit ihren Anschlagvorrichtungen **3** an den Arretierhalterungen **16** beziehungsweise den Teilarretierhalterungen **18** derart angeordnet sind, sodass ein Vertikalspiel gegeben ist. Das erfolgt im Ausführungsbeispiel durch Langlöcher **21** und dient zur besseren Ausrichtung und Einführung der Verschlüsse **1** mit ihrer Anschlagvorrichtung **3** in die Halteöffnungen an den Schlüssellochschienen **13.**

Zu erwähnen ist, dass in den **Fig. 5** und **Fig. 7** die Darstellungen nur schemenhaft erfolgt sind. Sofern Endabschnitte **15** nicht genau mit Verschlüssen **1** übereinstimmen und aufeinandertreffen, steht dies wegen der rein schemenhaften Darstellung nicht im Widerspruch zur Beschreibung.

### Bezugszeichenliste:

- 1.: Verschluss
- 2.: Aufnahme
- 3.: Anschlagvorrichtung
- 4.: Bügelelement
- 5.: erste Öse
- 6.: Endabschnitt
- 7.: Trennvorrichtung
- 8.: Riegel
- 9.: Stift
- 10.: asymmetrischer Abschnitt
- 11.: Zapfen
- 12.: tellerförmiger Abschnitt
- 13.: Schlüssellochschiene
- 14.: Streben
- 15.: Endabschnitt
- 16.: Arretierhalterung
- 17.: Anschlagseiten
- 18.: Teilarretierhalterung
- 19.: erster Verschluss
- 20.: Haltestange
- 21.: Langloch
- 22.: Drehachsen

## Patentansprüche

1. Verschluss (1) für Gurt-, Seil- und/oder Flächensicherungsmittel mit einer Aufnahme (2) für ein Gurt-, Seil- und/oder Flächensicherungsmittel oder mit einer Anschlagvorrichtung (3) zum Eingriff in eine Halteöffnung, an welche der Verschluss (1) anbringbar ist, der Verschluss (1) ein schwenkbares und arretierbares Bügelelement (4) aufweist, das im arretierten Zustand mit dem Verschluss (1) eine erste Öse (5) des Verschlusses (1) bildet, wobei die Aufnahme (2) einen ersten Abschnitt des Gurt-, Seil- und/oder Flächensicherungsmittels aufnehmen kann und der Verschluss (1) mittels des schwenkbaren und arretierbaren Bügelelements (3) mit einem zum ersten Abschnitt korrespondierenden Bereich oder einem Endabschnitt (15) des Gurt-, Seil- und/oder Flächensicherungsmittels eine lösbare, miteinander koppelbare Verbindung eingehen kann.

2. Verschluss (1) nach Anspruch 1, wobei das Bügelelement (4) des Verschlusses (1) in eine Schlaufe des korrespondierenden Bereichs oder des Endabschnitts (15) des Gurt-, Seil- und/oder Flächensicherungsmittels eingreifen kann, sodass die Schlaufe im arretierten Zustand des Bügelelementes (3) in der ersten Öse (5) des Verschlusses (1) funktionssicher gehalten werden kann.

3. Verschluss (1) nach Anspruch 1 oder 2, wobei das Bügelelement (3) in Zugrichtung des Gurt-, Seil- und/oder Flächensicherungsmittels verschwenkbar und öffnenbar ist.

4. Verschluss (1) nach einem der vorherigen Ansprüche, wobei die Aufnahme eine zweite Öse ist, die eine Schlaufe des ersten Abschnitts des Gurt-, Seil- und/oder Flächensicherungsmittels aufnehmen kann.

5. Verschluss (1) nach einem der vorherigen Ansprüche, wobei die Anschlagvorrichtung einen Zapfen (11) zur Anordnung an eine Schlüssellochschiene (13) aufweist.

6. Verschluss (1) nach einem der vorherigen Ansprüche, wobei der Verschluss (1) mit seiner Anschlagvorrichtung (3) von einer Arretierhalterung (16) oder einer Teilarretierhalterung (18) aufgenommen und funktionssicher gehalten werden kann, wobei die Arretierhalterung (16) oder die Teilarretierhalterung eine horizontale oder vertikale Schiene ist.

7. Trennvorrichtung (7) in Form eines flächenhaften Gebildes zur Sicherung von Ladungen eines Laderaumes, wobei die Trennvorrichtung (7) durch sich in einem definierten Winkel in einer Ebene kreuzende biegeschlaffe Streben (14) gebildet wird und die biegeschlaffen Streben (14) in Kreuzungspunkten miteinander verbunden sind und die Trennvorrichtung (7) randseitig Anschlagvorrichtungen aufweist, wobei die Trennvorrichtung (7) mindestens einen Verschluss (1) mit den Merkmalen gemäß einer der Ansprüche 1 bis 6 aufweist und der mindestens eine Verschluss (1) an mindestens einer biegeschlaffen Strebe (14) angeordnet ist und der Verschluss (1) mit einem zu der mindestens einen biegenschlaffen Strebe (14) korrespondieren Bereich der Trennvorrichtung (7) eine lösbare miteinander koppelbare Verbindung eingeht.

8. Trennvorrichtung (7) nach Anspruch 7, wobei das schwenkbare Bügelelement (4) des mindestens einen Verschlusses (1) in eine Schlaufe des korrespondierenden Bereichs der Trennvorrichtung (7) eingreifen kann, sodass die Schlaufe im arretierten Zustand des Bügelelements (4) in der ersten Öse (5) des mindestens einen Verschlusses (1) funktionssicher gehalten werden kann.

9. Trennvorrichtung (7) in Form eines flächenhaften Gebildes zur Sicherung von Ladungen eines Laderaumes, wobei die Trennvorrichtung (7) durch sich in einem definierten Winkel in einer Ebene kreuzende biegeschlaffe Streben (14) gebildet wird und die biegeschlaffen Streben (14) in Kreuzungspunkten miteinander verbunden sind, wobei die Trennvorrichtung (7) mehrere Verschlüsse (1) mit einer Anschlagvorrichtung (3) mit den Merkmalen gemäß einer der Ansprüche 1 bis 6 aufweist und die Verschlüsse (1) mit ihrer jeweiligen Anschlagvorrichtung (3) an den biegeschlaffen Streben (14) derart angeordnet sind, dass die Verschlüsse (1) mit einem Endabschnitt (6) der Streben (14) eine lösbare, miteinander koppelbare Verbindung eingehen.

10. Trennvorrichtung (1) nach Anspruch 9, wobei die Verschlüsse (1) mit dem schwenkbaren und arretierbaren Bügelelement (4) in eine Schlaufe des Endabschnitts (15) der Streben (14) eingreifen, sodass die Schlaufe im arretierten Zustand des Bügelelements (4) in der ersten Öse (5) der Verschlüsse (1) funktionssicher gehalten wird.

11. Trennvorrichtung (7) nach einem der vorherigen Ansprüche 9 oder 10, wobei die Anschlagvorrichtung (3) der jeweiligen Verschlüsse (1) mit ihren Zapfen (11) an eine Halteöffnung, so eine Öffnung einer Schlüssellochschiene (13), eingreifen kann.

12. Trennvorrichtung (7) nach einem der vorherigen Ansprüche 9 bis 11, wobei die Trennvorrichtung (7) mindestens eine Arretierhalterung (16) aufweist, welche die oder einen Teil der Verschlüsse (1) mit ihren Anschlagvorrichtungen (3) jeweils derart aufnimmt, dass ein Eingriff der Anschlagvorrichtungen (3) in eine Halteöffnung noch gewährbar ist und die mindestens eine Arretierhalterung (16) zumindest an einer Anschlagseite (17) der Trennvorrichtung (7) angeordnet ist.

13. Trennvorrichtung (7) nach Anspruch 9 bis 11, wobei die Trennvorrichtung (7) mindestens eine Teilarretierhalterung (18) aufweist, welche bodenseitige Verschlüsse (1) der Trennvorrichtung (7) mit ihren jeweiligen Anschlagvorrichtungen (3) jeweils derart aufnimmt, dass ein Eingriff der Anschlagvorrichtungen (3) in die Halteöffnung noch gewährbar ist und die mindestens eine Teilarretierhalterung (18) zumindest an einer Anschlagseite (17) der Trennvorrichtung (7) angeordnet ist.

14. Trennvorrichtung (7) nach einem der Ansprüche 9 bis 13, wobei die mindestens eine Arretierhalterung (16) und die mindestens eine Teilarretierhalterung (18) Verschlüsse (1) mit ihren Anschlagvorrichtungen (3) derart formschlüssig aufnehmen, dass eine Relativbewegung der Verschlüsse (1) zu diesen in Zugrichtung gewährleistet ist.

15. Trennvorrichtung (7) nach einem der Ansprüche 9 bis 14, wobei ein erster Verschluss (19) mit seiner Anschlagvorrichtung (3) an der mindestens einen Arretierhalterung (16) oder der mindestens einen Teilarretierhalterung (18) derart angeordnet ist, sodass eine horizontale Relativbewegung in Zugrichtung zu diesen nicht erfolgt und ein Eingriff der Anschlagvorrichtung (3) in eine Halteöffnung gewährbar ist.
